# EUROPEAN PATENT APPLICATION

(11) **EP 2 180 334 A2**
(43) Date of publication of application: **28.04.2010**
(21) Application number: 09174053.0
(22) Date of filing: 26.10.2009
(51) Int. Cl.: G01S 5/02, G01S 5/00

(54) **Location system and method with a fiber optic link**

(30) Priority: 27.10.2008 US 108675 P
(71) Applicant: Aeroscout, Ltd., 76702 Rehovot (IL)
(72) Inventor: Aljadeff, Daniel, 55550, Kiryat Ono (IL)
(74) Representative: Betten & Resch

(57) **Abstract**

A TDOA (time difference of arrival) location system, in which mobile wireless devices broadcast wireless signals which are received by two or more transceivers deployed in the vicinity of the mobile wireless device. Each transceiver measures the TOA (time of arrival) of the received broadcasted signal and reports the TOA to a central server. The central server then calculates the mobile device position using multilateration of TDOA values. The system uses fiber optic links between the antennas and the transceivers deployed in the location area to provide unique advantages that couldn't be achieved using RF coaxial cables.

## Description

### Related Patent Applications

The present application claims the benefit of U.S. Provisional Patent Application entitled "LOCATION SYSTEM AND METHOD WITH FIBER OPTIC LINK", filed October 27, 2008, having serial number 61/108, in the name of the same inventor.

The present application is further related to United States Patent Application entitled "METHOD AND SYSTEM FOR LOCATION FINDING IN A WIRELESS LOCAL AREA NETWORK", filed on August 20, 2002, having a serial number 10/225,267; United States Patent 6,968,194, entitled "METHOD AND SYSTEM FOR SYNCHRONIZING LOCATION FINDING MEASUREMENTS IN A WIRELESS LOCAL AREA NETWORK", issued on November 22, 2005; and United States Patent Application, entitled "METHOD AND SYSTEM FOR SYNCHRONIZATION OFFSET REDUCTION IN A TDOA LOCATION SYSTEM", filed on October 24, 2006, having a serial number 11/552,211; the specifications of which are herein incorporated by reference.

### Field of the Intention

The present invention relates generally to communications networks, and more specifically, to the use of fiber optic links in a radio location system as a replacement to RF coaxial cable links.

### Background of the Invention

A multitude of wireless communications systems are in common use today. Mobile telephones, pagers and wireless-connected computing devices such as personal digital assistants (PDAs) and laptop computers provide portable communications at virtually any locality. Wireless local area networks (WLANs) and wireless personal area networks (WPANs) according to the Institute of Electrical and Electronic Engineers (IEEE) specifications 802 , 11 (WLAN) (including 802.11a, 802.11b, 802.11g, 802.11n, etc.), 802.15.1 (WPAN) and 802.15.4 (WPAN-LR) also provide wireless interconnection of computing devices and personal communications devices, as well as other devices such as home automation devices.

Within the above-listed networks and wireless networks in general, in many commercial and industrial applications it is desirable to know the location of wireless devices and RFID tags. The above-irocorporated patent applications describe a system for location finding in a wireless area network.

Techniques that may be used to determine location are disclosed in the abowe-incorporated patent applications. The techniques include loop delay measurement for distance determination or received signal strength measurement (RSSI), time-difference-of-arrival techniques (TDOA), and angle-of-arrival techniques (AOA) for location finding.

A typical deployment of such a location system includes a plurality of WLAN transceivers and/or access points, each unit connected to one or two antennas to receive and transmit wireless signals. According to different deployment alternatives, the antennas of those transceivers and/or access points can be directly connected to the unit or through a suitable RF coaxial cable.

Typical uses of RF coaxial cables include many cases where the antenna shall be mounted on a mast or pole to ensure proper coverage while the transceiver or access point unit needs to be mounted on the ground or in a covered area far away from its antenna. In those cases, the length of the coaxial cable is a critical factor since it directly affects the system performance. A long RF coaxial cable (e.g. > 10-15m) may have a significant attenuation (e.g. >3dB) that will degrade the overall system performance.

This problem has already been identified and fiber optic solutions have been proposed and commercially implemented. This solution consists of replacing the RF coaxial cable with a fiber optic link and two transponders which convert the RF signal to a light signal and vice versa, Since the fiber optic cable has very low signal attenuation over distance, a very long link between the antenna and the transceiver or access point can be deployed while still maintaining a good system performance.

In many communication systems, those fiber optic links operating as a replacement to RF links are already available from several vendors. In those cases, knowing the overall delay of the link with a high precision (e.g. ∼ 1 nsec or less) is not important since this delay does not affect the received or transmitted signal.

However, when using those links in a TDOA location system, knowing those link delays is critical to ensure proper operation of the system, In addition, those fiber optic links enable several advantages which are specifically beneficial to location systems.

For example, US20080194226 discloses a method and system for providing E911 services for a distributed antenna system uses a lookup table including round trip delay (RTD) ranges for a number of nodes of the distributed antenna system. The system has a lookup table based on the values of the fiber delays and air delays for each node on the distributed antenna system to determine the exact location of the wireless unit generating the E911 call.

US5457557 discloses a fiber optic RF signal distribution system which has a plurality of antenna stations, each station including an RF antenna. A central RF signal distribution hub receives and transmits signals external to the system. A pair of optical fibers connects each antenna station directly to the distribution hub with the connections being in a star configuration.

Similar systems are disclosed in US6812905, US5936754, US6801767, US6597325, US7469105 and US6826164.

Other implementation including optical fibers include conversion of RF signals to digital signals and their transmission over fibers. US7366150 discloses an indoor local area network (LAN) system using an ultra wide-band (UWB) communication system. The system comprises access point adapted to receive the analog signal of the ultra wide-bandwidth transmitted from the remote terminal and convert the received analog signal into an optical signal.

A common problem of TOA location systems is the receiver time synchronization which is essential to allow a correct TDOA calculation when a wireless signal is time stamped by two or more receivers. This synchronization can be achieved by providing a common clock to all the receivers through cables connected between them and the common clock source or by using wireless methods. Both techniques are well known and widely used in the industry.

Although clock distribution solves the problem of the continuous drifts between the clocks in the different receivers, the initial offset of the time counters is a problem that requires special solutions.

Using fiber optic links enables one to concentrate in a single place all the transceivers used to locate in a specific area thus significantly simplifying the clock distribution and also providing several solutions to the initial offsets of the TOA counters used to time stamp the received signals.

Therefore, it would be desirable to provide a method and system for using fiber optic links in a TDOA location system, said fiber optic link having the properties and functionality required to solve common problems found in TDOA location systems and to ensure their proper system operation.

### Summary Of The Invention

The above objectives of using fiber optic links in a location system are achieved in a method, system and related elements.

The method is embodied in a system that determines the physical location of a first mobile wireless device coupled to a wireless network by processing the measured characteristics of signals received from the first wireless device by one or more other wireless transceiver devices deployed in the location area.

More specifically, this invention applies to a TDOA (time difference of arrival) location system, in which mobile wireless devices broadcast wireless signals which are received by two or more transceivers deployed in the vicinity of said mobile wireless device. Each transceiver measures the TOA (time of arrival) of the received broadcasted signal and reports the TOA to a central server. Said server then calculates the mobile device position using multi-lateration of TDOA values.

This patent further refers to the use of fiber optic links between the antennas and the transceivers deployed in the location area to provide unique advantages that could not be achieved using RF coaxial cables. Those advantages are specifically useful in TDOA location systems.

In one preferred embodiment of this invention, the wireless transceivers used to receive wireless signals from the mobile wireless device are installed in one central place and the antennas of each of said transceivers are mounted on poles, walls, buildings, etc in the located area.

Each of said transceivers is connected to its antenna (s) using a fiber optic link including at least three main components: A local transponder connected to the transceiver which converts RF signals from the transceiver to light signals and vice versa, a fiber optic cable to transmit those light signals to long distances (e.g. from tens of meters to few kilometers) and a remote transponder which converts the light signals from the fiber optic cable to RF signals and vice versa. This remote transponder is also connected to the antenna(s),

In such a system, the transceivers are timed synchronized using wireless synchronization. The delay of the fiber optic link is automatically cancelled during the process of offset correction of the TOA counters used for time stamping.

In another preferred embodiment, part or all of the transceivers are replaced by receivers (without transmitter) thus simplifying the fiber optic link and the transponders.

Since all the transceivers associated to a specific location area can now be concentrated in one single place, there are several advantages as follows:
- All the transceivers can be connected with short cables (e.g. CAT5 or CAT6) to an Ethernet switch or hub located in the same place, thus saving the cost of those cables.
- Since the fiber optic is inherently immune from lightning there is no need to protect the system against it. This is a significant problem when an RF coaxial cable is connected between the antenna and the transceiver.
- The transceivers can be installed in an indoor place although the location area is outdoors. This allows using transceivers rated to indoors environmental conditions which are cheaper than units that must withstand severe outdoors environmental conditions.
- The maintenance of the transceivers is simpler since all the equipment is installed in one place.
- It is possible to provide to all the location transceivers a common timing signal and provide a more stable synchronization since there is no drift between the clocks in the transceivers. Although this architecture is also possible when the transceivers are deployed in different places (several commercial systems work in this way), this requires sending those timing signals over long cables thus imposing deployment limitations and making the deployment more complicate and expensive.
- The common timing signal can also be used to provide a common synchronization (sync) marker to align the offset of all the TOA counters in the transceivers. This technique is widely used and also implemented when the transceivers are not installed in one place. According to the present invention, this marker can be provided to all the transceivers at almost the same time thus providing full synchronization of all the TOA counters.

Other preferred embodiments include the integration of multiple transceivers in one single enclosure sharing a common data bus and a common TOA counter.

Other embodiments include means for self calibration of the RF and fiber optic link delay, integration of the remote transponder into the antenna and providing power to the remote transponder using a copper cable which is bundled in the fiber optic cable.

The foregoing and other objectives, features, and advantages of the invention will be apparent from the following and more particular, descriptions of the preferred embodiments of the invention, as illustrated in the accompanying drawings.

### BRIEF DESCRIPTION OF THE DRAWINGS

**Figure 1** is a pictorial diagram depicting a wireless network with a location system in which preferred embodiments of the invention may be practiced.
**Figure 2** is a pictorial diagram depicting a wireless network with a location system in which a preferred embodiment of the invention is shown. This embodiment includes the provision of a common timing signal to some of the transceivers.
**Figure 3** is a pictorial diagram depicting a block diagram of a transceiver according to a preferred embodiment and its connection to the fiber optic link.
**Figure 4** is a pictorial diagram depicting a block diagram of a location transceiver according to another preferred embodiment and its connection to the fiber optic link.
**Figure 5** is a pictorial diagram depicting a block diagram of a location transceiver according to another preferred embodiment supporting antenna diversity architecture. The diagram shows the transceiver connection to the transponder.
**Figure 6** is a pictorial diagram depicting a detailed block diagram of a location transceiver according to a preferred embodiment of this invention supporting a mechanism that allows integrated measurement of the RF and fiber optic link delay.
**Figure 7** is a pictorial diagram depicting a detailed block diagram of a section of the remote transponder according to a preferred embodiment of this invention supporting a mechanism that allows integrated measurement of the RF and fiber optic link delay with antenna diversity.
**Figure 8** is a pictorial diagram depicting a detailed block diagram of a section of the remote transponder according to another preferred embodiment of this invention supporting a mechanism that allows integrated measurement of the RF and fiber optic link delay and antenna diversity whether all the remote transponder circuitry is embedded in the diversity antenna case.

### DETAILED DESCRIPTION OF THE PREFERRED EMBODIMENTS

The present invention provides TDOA location of a mobile wireless device (e.g. tag, laptop, VoIP phone, bar code reader. etc.) within a wireless network such as a WLAN (e.g. IEEE 802.11a/b/g/a/n) or other any other suitable wireless network for TDOA location such as networks using UWB technology.

As described in the above-incorporated patent applications, the TDOA location system may include wireless synchronization as well as other improvements to reduce the synchronization offsets that may be caused by such synchronization method.

In said TDOA location system, multiple (two or more) receivers or transceivers are used to calculate the time-difference-of-arrival (TDOA) of wireless signals received from a transmitting source. Some or all the transceivers and/or receivers are connected to their respective antennas using a fiber optic link thus providing the capability to install those units far from their antennas without degrading the system performance as topically caused by long RF coaxial cables.

The location of the transmitting source (e.g. RFID tag or mobile station) can be determined by triangulation, based on the difference between the signal arrivals at the multiple receivers. Angle of arrival methods (AOA) may also be used to locate a unit by intersecting the line of position from each of the receivers. Those and other techniques for providing wireless device location information are well known to those skilled in the art and may be used within the method and system of the present invention taking advantage of the special architecture and benefits provided by this invention.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Some embodiments of the invention are herein described, by way of example only, with reference to the associated drawings. With specific reference now to the drawings in detail, it is stressed that the details shown are by way of example and for purposes of illustrative discussion of embodiments of the invention. In this regard, the description taken with the drawings makes apparent to those skilled in the art how embodiments of the invention may be practiced.

The terms "comprises", "comprising", "includes", "including", "having" and their conjugates mean "including but not limited to". The term "consisting of" means "including and limited to".

The term "location transceiver" means any wireless communication unit which is part of a location system, and used to communicate with tags or any other wireless mobile devices being located by the location system. The term "location transceiver" includes WLAN Access Points (e.g. APs compliant to IEEE 802.11a/b/g/n), location receivers (in those cases where there is no need for 2-way communication), location transceivers, combinations of the above and other wireless location devices operating in the unlicensed frequency bands (e.g. ISM bands), UWB bands or any other radio frequency band (licensed or unlicensed) applicable to a location system.

The term "tag" means any portable wireless device being located by the location system, including unidirectional or bidirectional communication means, stand alone or integrated into other devices, battery powered or externally powered by any other source, passive, semi-passive or active RFTD tags and also portable wireless devices including other communication means in addition to the one used to communicate with the location transceivers (e.g. ultrasound, infrared, low frequency magnetic interface, wired serial interface, etc.).

The term "transponder" means an electronic unit able to convert RF signals (e.g. signals in the 2.4 GHz, 5.7 GHz ISM bands or UWB signals) to light signals and vice versa. The transponder may be adapted to different types of fiber optic cables used to transmit and receive the light signals as well as to different kinds of RF signals. RF-Fiber optic transponders are commercially used for many applications. According to this invention, the transponder unit may also comprise other functions which enhance its functionality in accordance to some preferred embodiments.

The term "antenna" means any RF antenna used to transmit and/or receive RF signals. It includes both omni-directional and directional antennas of any type and gain.

The term "fiber optic" means a fiber optic cable used for communication (RF and/or digital) including single mode and multi-mode fibers.

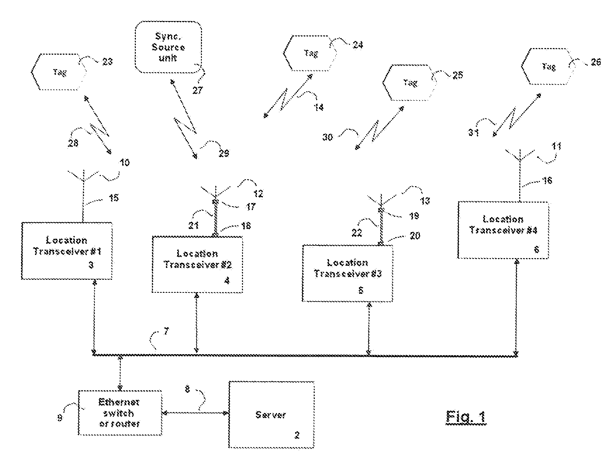

Referring now to the figures and in particular to **Figure 1**,a location system comprising four locations transceivers **3-6** are connected to a server **2** through a Ethernet **7** network. The location transceivers **3-6** are all connected to an Ethernet switch, hub or router **9** but any other configuration including several switches, hubs or routers is also possible and within the scope of this embodiment. The server **2** is also connected to the Ethernet switch **9** using a commonly used CATS cable **8** or any other suitable replacement.

In this location system as depicted in Figure 1, location transceiver #1 **3** and location transceiver #4 **6** have their antennas 10-11 connected with RF coaxial cables **15-16.** Location transceiver #2 **4** is connected to its antenna **12** through a fiber optic link comprising a local RF-fiber transponder **18** connected to the location transceiver **4** and a fiber optic cable 21, a fiber optic cable **21** and a remote RF-fiber transponder **17** connected to the antenna **12** and the fiber optic cable **21.** In a very similar way, location transceiver #3 **5** is connected to its antenna **13** through a fiber optic link comprising a local RF-fiber transponder **20** connected to the location transceiver **5** and the fiber optic cable **22,** a fiber optic cable **22** and a remote RF-fiber transponder **19** connected to the antenna **13** and the fiber optic cable **22.** The power to the remote transponder for both location transceivers can be supplied either from a power source close to the antenna or via a copper cable bundled in the fiber optic cable (not shown).

The location system further comprises a wireless sync source **27** transmitting beacons **29** which are received by the location transceivers **3-6.** By measuring the time of arrival (TOA) of those beacons **29** at each location transceiver **3-6** and reporting the TOA values to the server **2,** it is possible to estimate the continuous TOA counter offset between all the location transceivers **3-6** and synchronize the whole location system to perform TDOA location. As previously mentioned, this synchronization technique is described in United States Patent 6,968,194, entitled "METHOD AND SYSTEM FOR SYNCHRONIZING LOCATION FINDING MEASUREMENTS IN A WIRELESS LOCAL AREA NETWORK", issued on November 22, 2005 and United States Patent Application, entitled "METHOD AND SYSTEM FOR SYNCHRONIZATION OFFSET REDUCTION IN A TDOA LOCATION SYSTEM", filed on October 24, 2006, having a serial number 11/552,211.

Also according to the preferred embodiment depicted in **Figure 1****,** four tags **23-26** are located by the location system. Each tag **23-26** transmits messages **28-31** which are received by two or more location transceivers **3-6.** By measuring the TOA of those messages **28-31** when received by the location transceivers **3-6** and reporting them to the server **2,** the server **2** can calculate the position of the tags **23-26** using TDOA multilateration. TDOA location techniques are well known to the skilled in the art and beyond the scope of this patent.

Therefore and according to this preferred embodiment, the location system includes two location transceivers **4-5** which can be deployed far from their antennas **12-13.** As can be easily understood, another preferred embodiment of the location system may include location transceivers which all of them are far from their antennas and connected to the antennas with fiber optic links.

In the depicted embodiment, the fiber optic links **21, 22** enables to concentrate two location transceivers **4, 5** in a single place (together or not with other equipment) thus providing several advantages to the user as easier maintenance, lightning protection (due to the fiber link), protection against hard environmental conditions, etc.

As can be easily understood, the location transceivers **3-6** can also be replaced by receivers only, since in some location system architectures they are not required to transmit any message. As already explained and for the sake of simplicity, in any case where a location transceiver is mentioned in this invention, it can be optionally replaced by a location receiver if that unit is not required to transmit messages as part of its normal operation.

Optionally, in another preferred embodiment, the sync source is one of the location transceivers **3-6** which transmit beacons **29** used for the location system synchronization.

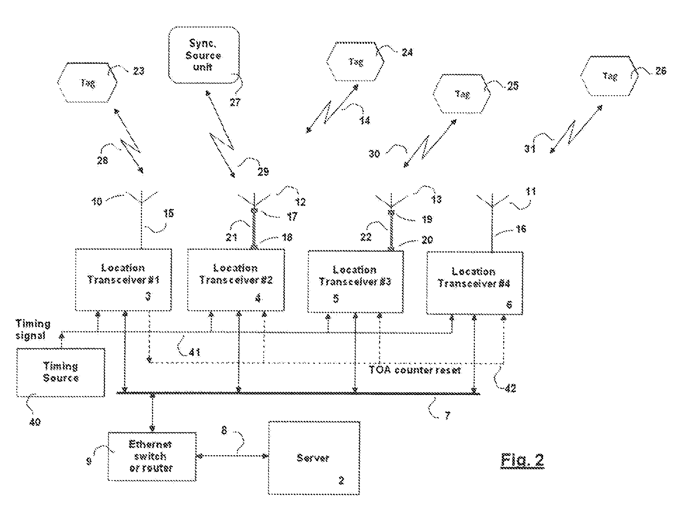

Referring now to **Figure 2****,** another embodiment of the location system is depicted. **Figure 2** depicts a location system comprising four locations transceivers **3-6** connected to a server **2** through an Ethernet **7** network. The location transceivers **3-6** are all connected to an Ethernet switch, hub or router **9** but any other configuration including several switches, hubs or routers is also possible and within the scope of this embodiment. The server **2** is also connected to the Ethernet switch **9** using a commonly used CAT5 cable **8** or any other suitable replacement.

In this location system as depicted in **Figure 2****,** location transceiver #1 **3** and location transceiver #4 6, have their antennas **10-11** connected with RF coaxial cables **15-16.** Location transceiver #2 **4** is connected to its antenna **12** through a fiber optic link comprising a local RF-fiber transponder **18** connected to the location transceiver **4** and the fiber optic cable **21,** a fiber optic cable **21** and a remote RF-fiber transponder **17** connected to the antenna **12** and the fiber optic cable **21.** In a very similar way, location transceiver #3 **5** is connected to its antenna **13** through a fiber optic link comprising a local RF-fiber transponder **20** connected to the location transceiver **5** and the fiber optic cable **22,** a fiber optic cable **22** and a remote RF-fiber transponder **19** connected to the antenna **13** and the fiber optic cable **22.** The power to the remote transponder in both location transceivers can be supplied either from a power source close to the antenna or via a copper cable bundled in the fiber optic cable.

Also according to this preferred embodiment as depicted in **Figure 2****,** four tags **23-26** are located by the location system. Each tag **23-26** transmits messages **28-31** which are received by two or more location transceivers **3-6.** By measuring the TOA of those messages **28-31** when received by the location transceivers **3-6** and reported to the server **2,** the server **2** can calculate the position of the tags using TDOA multi-lateration.

According to this preferred embodiment, all the four location transceivers **3-6** are installed in one single place, close each to other. Two location transceivers **4-5** are deployed far from their antennas **12-13** while the other two location transceivers **3, 6** are connected relatively close to their antennas **10-11** through RF coaxial cables **15-16** (e.g. antennas mounted on a roof or wall close to the location transceiver installation). As can be easily understood, another preferred embodiment of the location system may include location transceivers which all of them are far from their antennas and connected to the antennas with fiber optic links.

In the depicted embodiment, and taking advantage of the concentrated deployment of the location transceivers **3-6,** additional advantages can be provided in addition to the already mentioned advantages as easier maintenance, lightning protection (due to the fiber link), protection against hard environmental conditions, etc.

The location system further comprises a central timing source **40** which provides a wired timing signal **41** to all the location transceivers **3-6.** According to a preferred embodiment, this timing signal may be a clock at frequencies in the range of 10-100MHz. This timing signal **41** or a synchronized derivative of it is used in each location transceiver to clock the TOA counter which is used to timestamp the received wireless signals. Since the location transceivers **3-6** are all deployed in a single place, providing this timing signal **41** to all the transceivers is very simple since it can be performed with very short cables and without having the limitations normally found when providing fast clocks over long lines.

Optionally and still taking advantage of the transceivers being close each to other, a common TOA counter reset signal **42** can be provided by one transceiver **3** to the other transceivers **4-6.** Since the distances between the units are short and can be fully controlled, it is possible to reset the TOA counters of all the transceivers **3-6** almost simultaneously thus providing a time synchronization between all the transceivers.

Since each of the transceivers **3-6** may have a different time delay of the received signals from the antenna to the time stamp section in the transceiver itself, it is possible to cancel this fixed offset by an initial calibration.

According to this preferred embodiment, a wireless sync source unit **27** transmits periodic beacons **29** which are received by each of the location transceivers **3-6.** By measuring the time of arrival (TOA) of those beacons **29** at each location transceiver **3-6** and reporting them to the server **2,** it is possible to estimate the time offset between all the location transceivers **3-6** and synchronize the whole location system to perform TDOA location. Since all the transceivers are clocked from a common timing signal **41** there is no drift between the TOA counters (one TOA counter in each location transceiver) and the TOA offsets due to different cable lengths remain fixed so far the cables connecting the antennas to the transceivers **15-16** and 21-22 are not modified. Even if one or more of the location transceivers are powered off and on, there is no need to recalibrate the system since the time offsets calculated during the calibration process are still valid and can be used.

Comparing this embodiment to the embodiment in **Figure 1****,** the sync source **27** in **Figure 1** must be continuously used since there is a continuous drift between the clocks at each location transceivers and therefore the TOA counter offsets cannot be kept with a fixed offset. The embodiment in **Figure 2** uses a common timing signal **41** and TOA counter reset **42** and therefore the sync source is only required for an initial calibration process and can be removed during the normal system operation. This is a significant advantage in many deployments since it provides a simpler and more stable synchronization.

Optionally, the TOA counter reset signal **42** can be combined with the timing signal itself thus providing both functions directly from the timing source **40** and using a single signal. This feature will be further described in other embodiments of this invention.

Although it is possible to use this synchronization technique when the location transceivers are installed close to their antennas and far from each other, the distribution of the timing signal is problematic and requires high quality shielded cables.

In another preferred embodiment, all (or part) the location transceivers installed in one place are enclosed in a single enclosure. For example, a motherboard including several slot connectors where each location transceiver is connected to the motherboard through one of said slot connectors. In this preferred embodiment a very easy and reliable distribution of the clock and TOA counter initialization can be implemented. The common clock may be generated internally on the motherboard and distributed through the motherboard to all the location transceiver boards. Optionally, all the location transceivers may share a single TOA counter thus eliminating the need for any distributed sync timing signal. In addition, it is also possible to have one central processor used to process the signals received from all the receivers enclosed in the same case.

In another embodiment the fiber cables **21-22** are bundled into a single cable which is chained from antenna to antenna. Since the location transceivers **4-5** are located in the same place, it is convenient to connect those units to a single cable with multiple fibers which is chained to both antennas **12-13.** Other preferred embodiments may include cable chaining to a plurality of antennas.

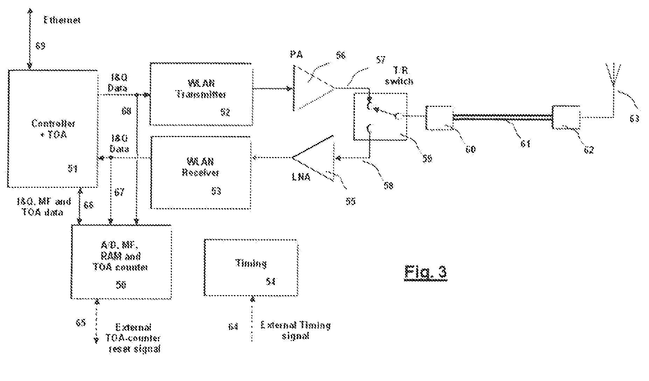

Referring now to **Figure 3****,** a block diagram of a location transceiver connected to an antenna **63** through a fiber optic link is depicted. According to this preferred embodiment, the location transceiver comprises a controller unit **51,** a WLAN transmitter **52,** a WLAN receiver **53,** and additional functions which will be further described. Typically, the location transceiver receives signals, measures and reports their Time of Arrival (TOA). It also reports other information which may comprise the received data and other generated data in the location transceiver.

According to this preferred embodiment as depicted in **Figure 3****,** when a wireless signal is received by the antenna **63,** the signal is sent to the RF-fiber remote transponder **62** through a short coaxial cable. Since the remote transponder **62** is located close to the antenna the attenuation losses of the coaxial cable are very low. The RF-fiber transponder **62** amplifies the received signal and converts it to a light signal which can be transmitted over a fiber optic cable **61.** This cable **61** may be very long since the attenuation of the fiber optic is very low compared to a typical coaxial cable. The light signal is converted back to an RF signal by a local RF-fiber transponder **60** and fed to the location transceiver RF section. The received signal is transferred through a transmit/receive (T/R) switch **59** to a low noise amplifier **55.** In many cases the received signal **58** after the T/R switch **59** is strong enough (due to the LNA in the remote transponder **62**) so there is no need for the LNA **55** and it can be avoided. The signal **59** can be fed directly to the WLAN receiver **53.**

The received signal is demodulated by the WLAN receiver **53** and converted to baseband signals I and Q **67.** Those signals are decoded by the baseband controller **51** and in parallel sampled by two A/D converters included in the A/D, MF, RAM and TOA counter function **50.** The sampled signals (e.g. with a resolution of 8-10 bits) are passed through a matched filter (MF) of the A/D, MF, RAM and TOA counter function **50** and the results stored in a dedicated RAM of the A/D, MF, RAM and TOA counter function **50.** As an example, a typical IEEE 802.11b at 1 Mbps BPSK signal will be sampled at a rate of 22MHz. The RAM of the A/D, MF, RAM and TOA counter function **50** stores the matched filter output of around 128 bits (2816 I and Q matched filter results). For the skilled in the art, it shall be obvious that a hardware implementation of the matched filter is just one preferred embodiment. Fast digital signal processors (DSP) can perform the same function by reading directly the I and Q samples **67.** In order to calculate the time of arrival of the received signal, a TOA counter of the A/D, MF, RAM and TOA counter function **50** is used to time stamp the samples. The timing of the TOA counter is controlled by a timing function **54** which provides the clock for this TOA counter of the A/D, MF, RAM and TOA counter function **50.** The master clock of this timing function **54** may be provided from an internal clock (e.g. TCXO or OCXO) or from an external signal **64** which can also be supplied to other location transceivers. The final TOA of the received signal is calculated by the controller **51** which reads the I&Q matched filter results and the TOA counter data **66** from the A/D, MF, RAM and TOA counter function **50.** The final TOA calculation may optionally include fine interpolation and sophisticated algorithms to reduce the effects of noise, multipaths and other interference conditions which may cause an error in the TOA calculation. Many of those algorithms are well known and beyond the scope of this invention.

Optionally the TOA counter can be initialized from the controller **51** or from an external signal **65.** Initializing the TOA counter of the A/D, MF, RAM and TOA counter function 50 from an external signal enables a controlled and synchronized initialization of those TOA counters in multiple location transceivers.

According to the preferred embodiment as depicted in **Figure 3**, the location transceiver can also transmit messages. Messages to be transmitted are prepared by the controller **51** and encoded by the baseband controller **51** which generates transmit I&Q signals **68.** Those I&Q signals **68** are modulated by the WLAN transmitter **52** and its output fed to a power amplifier **56.** The amplified signal **57** is conducted to the local RF-fiber optic transponder **60** through a T/R switch **59.** In many cases, it is preferable to avoid the use of the power amplifier **56** since the local transponder **60** does not require a high level input signal. Thus an input signal level of approximately 0 dBm can be directly provided by the WLAN transmitter **52** to the T/R switch **59** and then to the local transponder **60.** The transmitted signal is then converted by the local transponder **60** to a light signal which is sent through a fiber optic **61** to the remote RF-fiber optic transponder **62.** Note that the fiber optic cable **61** comprises two separate fibers, one used for the received signals and one for the transmitted signals. Although in principle it is possible to use a single fiber for both signals using well known techniques, using two fibers is in most of the cases (for relatively short distances of up to several hundred meters) a more cost effective solution.

The remote transponder **62** converts the light signal back to an RF signal and amplifies it to get the required signal power (e.g. +20 dBm). The amplified RF signal is transmitted using the location transceiver antenna **63.**

Also according to this preferred embodiment, the transmitted I&Q signals **68** are also sampled using the same function **50** used to sample the received signals. This sampling enables the controller **51** to calculate the time of transmission with the same level of accuracy as done with the received signals. Having this capability, the location transceiver can synchronize itself when transmitting beacons for wireless synchronization or when performing a distance measurement. This capability will be described in more detail when describing a method which allows self calibration of the fiber cable length. The controller **51** has an Ethernet interface **69** which allows communication to a server or to any other unit connected to the network.

In another preferred embodiment, the location transceiver operates as a receiver only. In that case, all the functions related to the transmission of signals can be saved including the relevant functions in the local and remote transponders. Also according to this preferred embodiment and referring to **Figure 3**, only a single fiber is used to receive signals.

Referring now to **Figure #4**, another preferred embodiment of the location transceiver is depicted. This embodiment comprises the same basic functions as described in the embodiment of **Figure 3**. However, according to this preferred embodiment, the location transceiver has no power amplifier and no T/R switch. The transmitted signal **57** is directly coupled to the local RF-fiber transponder **70.** In the receive path, the received signal **58** is directly connected to the LNA **55** without passing a T/R switch as in **Figure 3**. This embodiment has the advantage of having a simpler coupling to the local transponder **70** which optionally can be an integral part of the location transceiver. This option reduces equipment cost and simplifies the deployment since the fiber optic cable can be directly connected to the location transceiver.

In addition, and according to this preferred embodiment the initialization of the TOA counter of the A/D, MF, RAM and TOA counter function **50** used for time stamping of the received and/or transmitted signals is provided by the timing function **54.** The advantage of this approach is the fact that this initialization signal **71** can be directly derived from a periodic marker in the external timing signal **64.** A simple and common method to generate this marker in the timing signal is by masking one cycle of the timing signal (e.g. the timing signal amplitude will remain constant for one cycle) without changing the timing signal frequency. Preferably, this marker shall have a repetition period long enough to avoid TOA ambiguity of the time stamped signals. For example a repetition period of 1 every 10⁶ cycles of a 50 MHz clock, will create a marker every 20msec, time which is long enough to avoid any TOA ambiguity in typical WLAN location systems.

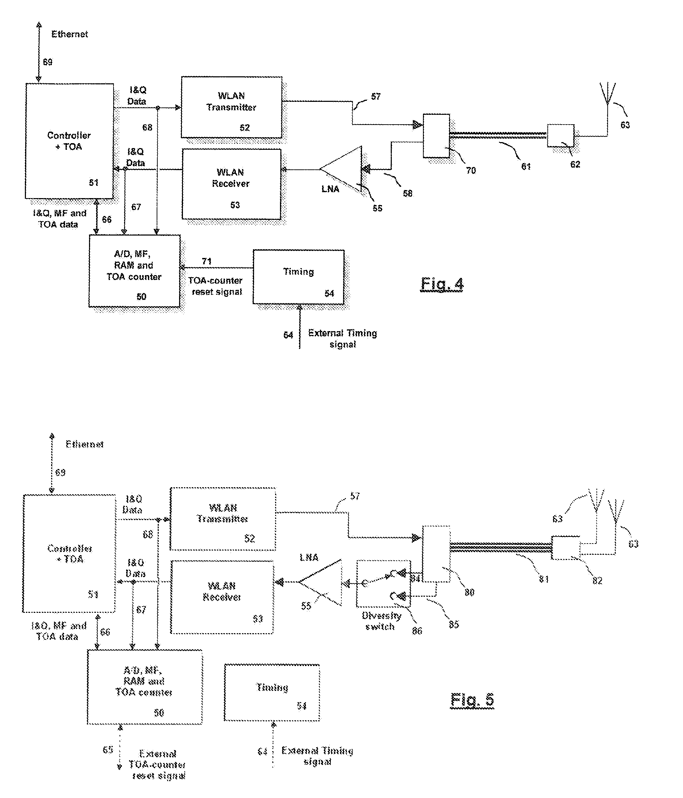

According to this preferred embodiment, a location system including location transceivers having the functionality as depicted in **Figure 4** and installed in a single place can be easily synchronized by a common timing signal which also includes a marker. This marker is used to generate a synchronous reset signal to the TOA counters of all said location transceivers.

Referring now to **Figure 5**, the block diagram of another preferred embodiment of the location transceiver is depicted. Similarly to the description of the block diagram in **Figure 3****,** the location transceiver includes a Controller and TOA function **51,** a WLAN transmitter **52,** a WLAN receiver **53** and LNA **55,** A/D, MF, RAM and TOA counter function **50,** a timing function **54** and additional functions which will be further described.

According to this preferred embodiment as depicted in **Figure 5****,** the location transceiver is connected to two antennas **63** operating as diversity antennas. When a wireless signal is received by one or both antennas **63,** the signal received by each antenna is sent to the RF-fiber remote transponder **82** through a short coaxial cable. Since the transponder **82** is located close to the antennas the attenuation losses of the coaxial cables are very low. The RF-fiber transponder **82** amplifies each of the received signals and converts them to separate light signals which are transmitted over a fiber optic cable **81.** In this embodiment the fiber optic cable **81** includes a separate fiber optic for each received signal. The light signals are converted back to RF signals by a local RF-fiber transponder **80** and fed to the location transceiver RF section.

The received RF signals **84** and **85** are connected to a diversity switch **86** and then a selected signal is connected to a low noise amplifier **55** part of the receiver chain. In many cases the received signals **84** and **85** are strong enough (due to the LNA in the remote transponder **82**) so there is no need for an LNA **55** and it can be avoided. The selected signal from the diversity switch **86** can be fed directly to the WLAN receiver **53.** Note that also this embodiment has no T/R switch as the embodiment described in **Figure 4****.** In this preferred embodiment, there is a direct and separate coupling of transmit and receive paths in the location transceiver and the RF-fiber transponder **80.**

The received signal selected by the diversity switch **86** is demodulated by the WLAN receiver **53** and converted to baseband signals I and Q **67.** Those signals are decoded by the baseband controller **51** and in parallel sampled by two A/D converters included in the A/D, MF, RAM and TOA counter function 50. The sampled signals (e.g. with a resolution of 8-10 bits) are passed through a matched filter (MF) of the A/D, MF, RAM and TOA counter function **50** and the results stored in a dedicated RAM of the A/D, MF, RAM and TOA counter function **50.** The RAM of the A/D, MF, RAM and TOA counter function **50** stores the matched filter output of around 128 bits (2816 I and Q matched filter results). For the skilled in the art, it shall be obvious that a hardware implementation of the matched filter is just one preferred embodiment. Fast digital signal processors (DSP) can perform the same function by reading directly the I and Q samples **67.** In order to calculate the time of arrival of the received signal, a TOA counter of the A/D, MF, RAM and TOA counter function **50** is used to time stamp the samples. The timing of the TOA counter is controlled by a timing function **54** which provides the clock for this TOA counter of the A/D, MF, RAM and TOA counter function **50.** The master clock of this timing function **54** maybe provided from an internal clock (e.g. TCXO or OCXO) or from an external signal **64** which can also be supplied to other location transceivers. The final TOA of the received signal is calculated by the controller **51** which reads the I&Q matched filter results and the TOA counter data **66** from the A/D, MF, RAM and TOA counter function **50.** As previously mentioned, the final TOA calculation may optionally include fine interpolation and sophisticated algorithms to reduce the effects of noise, multipaths and other interference conditions which may cause an error in the TOA calculation.

Optionally the TOA counter can be initialized from the controller **51** or from an external signal **65.** Initializing the TOA counter of the A/D, MF, RAM and TOA counter function **50** from an external signal enables a controlled and synchronized initialization of those counters in multiple location transceivers.

According to the preferred embodiment as depicted in **Figure 5****,** the location transceiver can also transmit messages. Messages to be transmitted by the controller **51** are encoded by a baseband controller **51** which generates transmit I&Q signals **68.** Those I&Q signals **68** are modulated by the WLAN transmitter **52** and its output **57** is directly fed to the local RF-fiber optic transponder **80.** In this preferred embodiment there is no power amplifier in the location transceiver since the local transponder **80** does not require a high level input signal. Thus a signal level of approximately 0 dBm can be directly provided by the WLAN transmitter **52** to the local transponder 60. The transmitted signal **57** is then converted by the local transponder **80** to a light signal which is sent through a fiber optic **81** to the remote RF-fiber optic transponder **82.** Note that the fiber optic cable **81** comprises three separate fibers, two fibers used for the received signals and one fiber used for the transmitted signal.

The remote transponder **82** converts the light signal back to an RF signal and amplifies it to generate the required signal power (e.g. +20 dBm). The amplified RF signal is then transmitted using one of the location transceiver antennas **63.**

Also according to this preferred embodiment, the transmitted I&Q signals **68** are also sampled using the same function 50 used to sample the received signals. This sampling enables the controller **51** to calculate the time of transmission with the same level of accuracy as done with the received signals. Having this capability, the location transceiver can synchronize itself when transmitting beacons for wireless synchronization or perform a distance measurement.

The controller **51** has an Ethernet interface **69** which allows communication to a server or any other unit connected to the network.

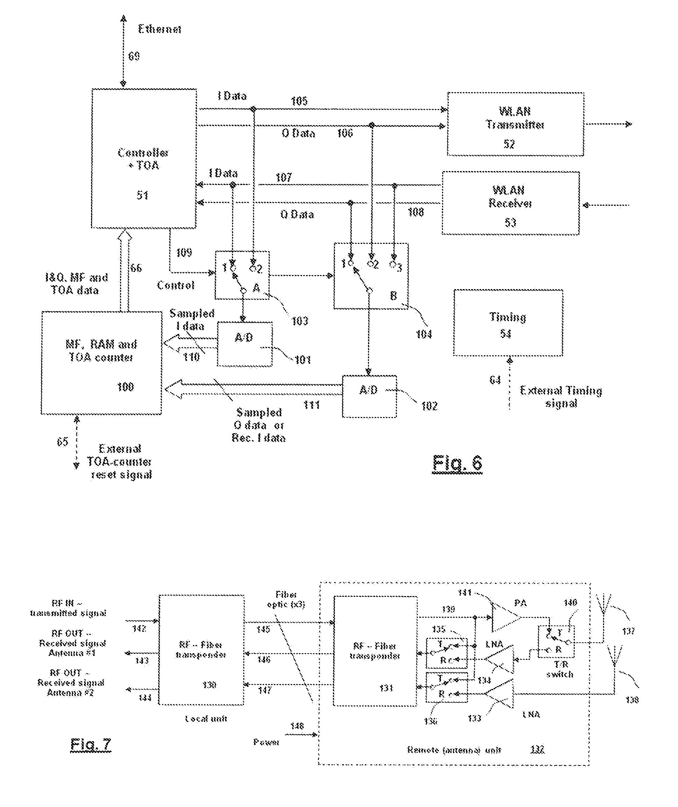

Referring now to **Figure 6**, the block diagram of another preferred embodiment of the location transceiver is depicted. In this preferred embodiment, the sampling of the transmitted and received I&Q signals includes a special implementation.

The transmitted I&Q signals **105-106** and the received I&Q signals 107-108 are connected to two analog switches (multiplexers) **103-104** in a way that enables unique functionality.

In normal operation during signal reception, both I&Q components **107-108** of the received signal are sampled by two parallel A/D converters **101-102.** Switch **103** is set to position 1 by the controller **51** through control lines **109.** The received I-signal **107** is then sampled by A/D **101.** Switch **104** is set to position 1 by the controller **51** through control lines **109.** The received Q-signal **108** is then sampled by A/D **102.**

In normal operation during signal transmission, both T&Q components **105-106** of the transmitted signal are sampled by the two A/D converters **101-102.** Switch **103** is set to position 2 by the controller **51** through control lines **109.** The transmitted I-signal **105** is then sampled by A/D **101.** Switch **104** is set to position 2 by the controller **51** through control lines **109.** The transmitted Q-signal **106** is then sampled by A/D 102.

In addition to this normal operation, the location transceiver can perform a self measurement of the RF and fiber optic link delay thus allowing a self calibration process.

Referring now to **Figure 7**, a fiber optic link with a remote transponder that supports this self calibration is depicted. In this preferred embodiment, the remote transponder **131** and additional functions are integrated in a remote antenna unit **132.** Those functions include T/R switches **135, 136** and **140,** LNAs **133-134** and a power amplifier **141.** The power **148** to this remote antenna unit is provided by a local power source close to the remote antenna unit 132.

In another preferred embodiment this local power source is a solar power unit mounted in the same pole as the antenna and the remote antenna unit **132.**

A transmitted signal **142** is converted by the local transponder **130** to a light signal and sent to the remote transponder **131** through a fiber optic **145.** The remote transponder **131** converts the light signal back to an RF signal **139** which drives the power amplifier **141.** In addition, the transmitted signal **139** is connected to two T/R switches **135-136** which send this signal back to the remote transponder **131.** Therefore the transmitted signal **139** is received back by the local transponder **130** after it passed through two fibers **146-147.**

Note that the remote transponder automatically controls the T/R switches **135-136.** When a signal is transmitted, the remote transponder senses the presence of energy of signal **139** and automatically sets both T/R switches **135-136** to transmit mode. In this mode, the transmitted signal is sent back to the local transponder **130.** When there is no signal being transmitted (absence of energy), the remote transponder **131** sets the T/R switches **135-136** to their normal receive mode thus allowing the reception of signals from antennas **137-138.**

When a signal is being transmitted by the location transceiver, the remote transponder also sets T/R switch **140** to transmit mode thus allowing the transmission of the signal through antenna **137.** When there is no signal being transmitted, the remote transponder **131** sets T/R switch **140** to its normal receive mode thus allowing the reception of signals from antenna **137.**

According to a preferred embodiment of a location transceiver as depicted in **Figure 6****,** when the location transceiver desires to perform a self measurement of the RF and fiber optic link delay (including the local and remote transponders delays), it transmits a signal with an I-component **105** (e.g. a BPSK signal). This signal is transmitted through the transmitter **52** and then fed **142** to the local transponder **130** as depicted in **Figure 7****.**

The transmitted signal is looped back by the remote transponder **131** and fed back to the location transceiver by the local transponder **130.** One of the received signals 143-144 is selected using a diversity switch **86** (e.g. as depicted in **Figure 5**) and then converted back to I&Q signals **107-108** by the WLAN receiver **53.**

The overall delay (receive + transmit) of the RF and fiber optic link including the transponders **130-131** can be measured by measuring the delay between the transmitted signal **105** and one or both of the received signals **107-108.** In this mode, switch **103** is set to position 1 and therefore A/D **101** samples the transmitted signal **105** while at the same time switch **104** is set to either position 1 or 3 to allow a simultaneous sampling of either one of the received signals **107-108** by A/D **102.** Since the delay of this link is unknown, also the phase of the received signal is unknown. Therefore the received signal energy may be either concentrated in one of its I&Q components only or split in both I&Q components **107-108.**

For this reason, the delay measurement may include two steps. In the first step the transmitted signal **105** is sampled together with the I-component **107** of the looped back signal and in the second step the same procedure is repeated with the Q component **108.**

Having the matched filter output of the sampled data of both transmitted **110** and received **111** signals, the controller **51** can calculate the overall delay using the TOA functions **50** which are normally used for the TOGA measurement of the transmitted or received signals.

This delay measurement operation can be performed for each of the receive paths **143-144** thus providing a better accuracy of the overall delay since both receive fibers **146-147** are bundled in the same cable.

In principle, the overall signal delay (from the A/D's **101-102** to the antennas **137-138**) include a small additional delay consisting of the power amplifier, the LNAs and the short RF coaxial cable. Those delays are fixed and easily calculated or measured and can be taken in account in the overall self calibration process. Since the fiber optic delay is very stable, this self calibration process is not required very often.

Knowing the overall delay of the RF link and optical link is very useful for the following reasons:
- In a TDOA location system being synchronized by wireless beacons, a location transceiver operating also as synchronization source can synchronize itself. This is self synchronization is performed by measuring the TOA of the transmitted messages used for synchronization. The RF + fiber link delay is necessary to cancel the sync offset caused to the sync transceiver when performing self synchronization.
- In a TOA location system using distance measurement between the sync source transceiver and each of the other location transceiver, it is necessary to know the RF + fiber link delay to calculate the true distance between the units. Distance measurement is used to reduce wireless synchronization offsets caused by multipaths.
- In a TDOA location system in which a group of location transceivers have a common TOA counter or their TOA counters are initialized simultaneously, knowing the RF + fiber link delay in each location transceiver avoids using a wireless signal to calculate the TOA offsets caused by this link.

In addition, the same mechanism can be used to provide additional advantages as follows:
- Detect link malfunctions: Periodic delay measurements can detect faults in the up or down links thus providing additional reliability to the system.
- Calibrate the gain of the received signals paths. Transmitting a test signal and receiving it back from each of the receive paths used for diversity, it is possible to detect gain/attenuation differences between those two paths.

In another preferred embodiments, the measurement of the link delay can be done with other known techniques as transmission of very short pulses or phase delay variations using frequency hopping techniques.

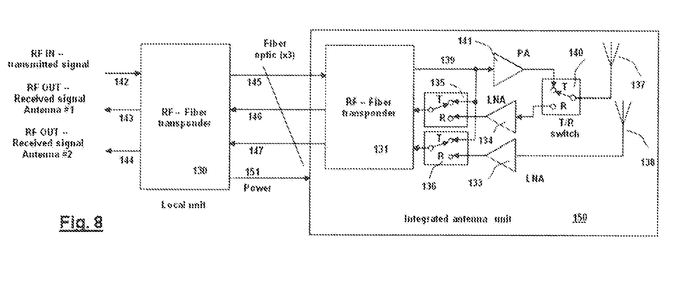

Referring now to **Figure 8**, the block diagram of another preferred embodiment of the fiber optic link is depicted showing additional advantages of the present invention. In this preferred embodiment, there is an integrated antenna unit **150** which includes the remote transponder 131 and additional functions all enclosed in the same case (radome) with the antennas **137-138.** The integrated antenna unit **150** is in practice, a diversity antenna with a fiber optic interface. This approach has several advantages as follows:
- The antennas **137-138** and all the remote transponder functions are all enclosed in a single case (radome) thus simplifying the installation and also reducing the overall cost.
- Improved reliability and improved performance by avoiding the RF connectors used for the antenna connection. The transponder LNAs **133-134** can be located very close to the antennas elements **137-138** thus reducing the RF losses and improving the receiver sensitivity.

In this preferred embodiment the power to the integrated antenna unit is provided through the local transponder **130** (e.g. from the location transceiver). The fiber optic cable includes also a copper cable **151** used to provide the DC power to the integrated antenna unit **150.** Since the power consumption of this integrated antenna unit is relatively low (typically 1-2 watts), the requirements for the copper cable **151** are not severe. Typically the integrated antenna unit will also include a voltage regulator (not shown) to provide a stable and clean power to the integrated antenna unit **150.**

The fiber optic or the copper cables connecting between the location transceiver and the remote antenna unit can also be used to send digital commands to the remote antenna unit and receive digital messages from it.

In another preferred embodiment, the remote antenna unit includes a small micro controller able to receive commands from the location transceiver or a central unit. Those commands can be used to control the remote transponder and perform diagnostics. This microcontroller can also send back status messages. In chained configuration, it is possible to use also multicast and/or broadcast commands sent to multiple remote antenna units.

Other preferred embodiments comprise using the same antenna for a location transceiver and a WLAN Access Point located in the same place. This technique is well known and commercially available.

Large location systems may include several groups of location transceivers each group concentrated in a different place and synchronized by a different timing source. In a preferred embodiment of such location system it may be necessary to synchronize between two or more of said timing sources. This synchronization can be achieved by having a connection between those timing sources and defining one of them as a master timing source. This master timing source will provide the clock to each of the other slave timing sources connected to said master timing source. The connection between those synchronized timing sources may be implemented using a CAT5/CAT6 cable or a fiber optic.

The principles of this invention can also be applied to a TDOA location system also capable to locate using Angle of Arrival (AOA).

It may be appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

While the invention has been particularly shown and described with reference to the preferred embodiments thereof, it will be understood by those skilled in the art that many alternatives, modifications and variations and other chancres in form, and details may be made therein within the scope of the invention.

According to an exemplary embodiment, a TDOA (time difference of arrival) location system, in which mobile wireless devices broadcast wireless signals which are received by two or more transceivers deployed in the vicinity of the mobile wireless device. Each transceiver measures the TOA (time of arrival) of the received broadcasted signal and reports the TOA to a central server. The central server then calculates the mobile device position using multi-lateration of TDOA values. The system uses fiber optic links between the antennas and the transceivers deployed in the location area to provide unique advantages that couldn't be achieved using RF coaxial cables.

## Claims

1. A wireless TDOA location system comprising:
at least one wireless transmitter operable to transmit wireless signals;
a plurality of receivers operable to receive and to estimate a time-of-arrival (TOA) of the wireless signals received from said at least one wireless transmitter;
at least a pair of fiber optic links, wherein each fiber optic link couples an antenna to a respective one of the plurality of receivers, the antenna operable to receive the wireless signal said at least one transmitter;
a synchronizing device to time synchronize the plurality of receivers with a common timing signal; and
processing device coupled to the plurality of receivers, and operable to calculate a location of the at least one wireless transmitter location based on the TOA of the wireless signals received

2. A method of locating a wireless transmitter using a wireless TDOA location system comprising:
transmitting wireless signals from at least one wireless transmitter;
receiving the wireless signals by a plurality of receivers;
estimating a time-of-arrival (TOA) of the wireless signals received by the receivers, wherein at least one of the plurality of receivers comprising an antenna physically separate from the at least one receiver, the antenna operable to receive the wireless signal, wherein the antenna is connected to the at last one receiver with a fiber optic link, wherein the at least one of said plurality of receivers comprising an antenna physically separate and connected to said receiver with a fiber optic link is physically close to at least one another receiver from said plurality of receivers, and
synchronizing the plurality of receivers by a common timing signal; and
sending the TOA values by the receivers to a processor, the processor operable to calculate the transmitter location based on the TOA values.

3. The wireless TDOA location system according to claim 1 or the method of locating a wireless transmitter according to claim 2 wherein the synchronizing device is a timing source or a timing source is provided, respectively, connected to the plurality of receivers wherein the timing source provides the common timing signal; and/or
wherein at least one of the plurality of receivers has wireless transmitter; and/or
wherein an initial calibration process is used to calculate a fixed time offset between time stamp functions at the plurality of receivers; and/or
wherein at least two of the plurality of receivers are enclosed in a same enclosure; and/or
wherein at least three receivers from the plurality of receivers are located or physically concentrated in a single place and wherein one of the plurality of receivers provides a signal to initialize the TOA estimate at the other of the plurality of receivers.

4. The wireless TDOA location system or the method of locating a wireless transmitter according to claim 3 wherein each of the two of the plurality of receivers comprises a time stamp function, the time stamp function operable to time stamp the wireless signals received at the plurality of receivers, the time stamp function further sharing a common TOA counter; and/or
wherein the enclosure further comprising a common processor to process the wireless signals received at the at least two of the plurality of receivers.

5. A wireless TDOA location system in accordance with claim 1 wherein the fiber optic link comprises:
a fiber optic cable;
a local unit comprising a first RF-fiber transponder coupled between a respective one of the plurality of receivers and the fiber optic cable; and
a remote unit comprising a second RF-fiber transponder coupled between the antenna and the fiber optic cable; and/or
wherein the plurality of receivers comprising an antenna coupled to the plurality of receivers with a fiber optic link are physically close to each other.

6. An apparatus in a wireless TDOA location system comprising:
a first wireless receiver operable to receive and estimate a first time-of-arrival (TOA) of wireless signals received from at least one wireless transmitter;
a first antenna operable to receive the wireless signal transmitted from the at least one transmitter and wherein the antenna is located at a distance from the first wireless receiver and attached to the first wireless receiver with a fiber optic link;
a timing source providing a common timing signal to time synchronize the first wireless receiver to a plurality of wireless receivers; and
a processor to calculate the wireless transmitter location using the TOA.

7. An apparatus according to claim 6, wherein the first wireless receiver is an IEEE802.11x WLAN receiver; and/or
wherein the common timing signal further includes a periodic marker to initialize a TOA estimate means; and/or
wherein the fiber optic link comprises:
a fiber optic cable;
a local unit comprising a first RF-fiber transponder connecting between the first receiver and the fiber optic cable; and
a remote unit comprising an RF-fiber transponder connecting between the antenna and the fiber optic cable; and/or
further comprising means for generating a common timing and a sync marker.

8. An apparatus according to claim 7, wherein the apparatus further comprises:
a wireless transmitter, wherein the first wireless receive and the transmitter are both coupled to the fiber optic link, the fiber optic link further comprising:
a transmit signal fiber bundled into the fiber optic cable, and wherein a remote unit comprises:
an RF-fiber transponder;
a power amplifier; and a T/R switch; and/or
wherein the apparatus further comprises means to provide electrical power to the remote unit, the electrical power provided through an electrical cable bundled into the fiber optic cable of the fiber optic link.

9. An apparatus according to claim 8, further comprising means operable to measure a time of transmission of transmitted signals by the transmitter.

10. An apparatus according to claim 9, wherein the apparatus is also operable to self measure a transmit and receive path signal propagation time over the fiber optic link.

11. An apparatus according to one of claims 6 to 10, wherein the first wireless receiver further comprises a receiver diversity switch, the fiber optic link connected to the apparatus comprising an additional receive signal path, the apparatus also connected to a second antenna through the additional receive signal path at the fiber optic link and the first wireless receiver operable to receive and process signals received by the second antenna,

12. An apparatus according to claim 11, wherein the apparatus further comprises means to perform a self calibration of an overall gain of each of the receive signal paths at the fiber optic link.

13. An apparatus according to one of claims 6 to 12, wherein the apparatus further comprises:
a second wireless receiver operable to receive and estimate a time-of-arrival (TOA) of UWB wireless signals received from at least one UWB wireless transmitter;
a second antenna operable to receive the UWB wireless, the second antenna located at a distance from the UWB receiver, and
a second fiber optic link, wherein the second antenna is connected to the second wireless receiver with the second fiber optic link, and
wherein the second wireless receiver is time synchronized to a plurality of wireless receivers by a common timing signal generated by a timing source, the timing source connected to the said second wireless receiver;
wherein the estimated TOA value of the UWB signal by the second wireless receiver is reported to the processor, the processor having communication with the second receiver and operable to calculate the transmitter location using the TOA value.

14. An apparatus according to one of claims 6 to 13, further comprising:
a second receiver operable to receive and estimate a second time-of-arrival (TOA) of wireless signals received from at least one wireless transmitter;
a second antenna operable to receive the wireless signals transmitted from said at least one transmitter and wherein said second antenna is physically separate from the second receiver and at a known distance from the first antenna, the second antenna is connected to the second receiver with a second fiber optic link; and
a TOA estimate means of second receiver is time synchronized to the TOA estimate means of the first receiver, and
wherein the estimated first and second TOA values are used to calculate the angle of arrival (AoA) of the wireless signal at the first and second antennas.

15. A fiber optic link for use in a wireless location system, the fiber optic link connected between an apparatus and an antenna, the antenna physically separate from the apparatus, wherein the apparatus operable to receive and to estimate the time-of arrival (TOA) of wireless signals received from at least one wireless transmitter, wherein the fiber optic link comprising:
a fiber optic cable;
a local unit at least comprising an RF-fiber transponder connecting between the apparatus and the fiber optic cable; and
a remote unit at least comprising an RF-fiber transponders connecting between the antenna and the fiber optic cable;
wherein the remote unit further comprises means to send back through the fiber optic link, signals transmitted by the apparatus, wherein the signals sent back are received by the apparatus;
wherein the apparatus comprising means to calculate the round trip time of the transmitted and received back signal.

16. A fiber optic link according to claim 15, wherein the remote unit is powered from a solar power source; and/or
wherein the antenna is integrated into the remote unit in a single enclosure; and/or
wherein the remote unit further comprises a controller, the controller controlling the operation of the remote unit; and/or
wherein the controller at the remote unit comprising means to receive digital commands from the apparatus, the commands sent through the same wires used to power the remote unit from the apparatus.
